# EUROPÄISCHE PATENTANMELDUNG

(11) **EP 2 251 654 A1**
(43) Veröffentlichungstag der Anmeldung: **17.11.2010**
(21) Anmeldenummer: 10450073.1
(22) Anmeldetag: 05.05.2010
(51) Int. Cl.: G01F 7/00

(54) **Anordnung zum Messen einer Flüssigkeitsentnahme aus einer Flüssigkeits-Hauptleitung**

(30) Priorität: 07.05.2009 AT 6982009
(71) Anmelder: Leitner, Manfred, 8055 Graz (AT)
(72) Erfinder: Leitner, Manfred, 8055 Graz (AT)
(74) Vertreter: Gibler & Poth Patentanwälte OEG

(57) **Zusammenfassung**

Bei einer Anordnung zum Messen einer Flüssigkeitsentnahme aus einer Flüssigkeits-Hauptleitung (86), wobei ein Makrozähler (82) strömungstechnisch in der Flüssigkeits-Hauptleitung (86) angeordnet ist, wird zum Erkennen besonders geringer, unkontrolliert aus der Flüssigkeits-Hauptleitung (86) austretender Flüssigkeitsmengen vorgeschlagen, dass ein Mikrozähler (1) strömungstechnisch in einer Bypassleitung (85) angeordnet ist, welche Bypassleitung (85) den Makrozähler (82) überbrückt, und dass bei einer Flüssigkeitsentnahme aus der Flüssigkeits-Hauptleitung (86) unterhalb eines vorgebbaren Grenzwertes ein Bypassventil (69) die Bypassleitung (85) freigibt und ein Überdruckventil (65) die Flüssigkeits-Hauptleitung (86) sperrt, und bei einer Flüssigkeitsentnahme über dem vorgebbaren Grenzwert das Bypassventil (69) die Bypassleitung (85) sperrt und das Überdruckventil (65) die Flüssigkeits-Hauptleitung (86) freigibt.

## Beschreibung

Die Erfindung betrifft eine Anordnung zum Messen einer Flüssigkeitsentnahme aus einer Flüssigkeits-Hauptleitung gemäß dem Oberbegriff des Patentanspruches 1.

Unkontrollierte Flüssigkeitsaustritte entstehen z.B. bei undichten Ventilen und Rohrverbindungen, Rissen in den Leitungen oder dgl.. Diese Undichtheiten können große Schäden anrichten, da sie durch die geringen und langsam austretenden Mengen oft erst entdeckt werden, wenn Mauern und Decken bereits durchnässt sind und Wasserflecken sichtbar werden.

Einige Lekagendetektoren nutzen die elektrische Leitfähigkeiten der austretenden Flüssigkeiten aus und messen mit Sensoren die Feuchtigkeit. Das hat den Nachteil dass für eine lückenlose Überwachung von Leitungssystemen die Sensoren bzw. Elektroden über den gesamten Leitungsverlauf platziert werden müssen. Für die Entnahmestellen selbst und alle an diese Entnahmestellen angeschlossenen Geräte, Gartenschläuche usw. ist keine Überwachung gegeben.

Andere Schutzeinrichtungen, messen den Durchfluss mittels Flügelrad- oder Ringkolbenzählwerk und werten die Messungen elektronisch aus. Diese Zählwerke arbeiten erst ab einem bestimmten Anlaufwert, der abhängig von der Bauart zwischen 2 1/h und 6 1/h betragen kann. Das sind immerhin mindestens 48 Liter pro Tag, die bei einem Gebrechen von Leitungen austreten und durch herkömmliche Schutzeinrichtungen nicht erfasst werden. Diese Mengen können sehr großen Schäden anrichten, weil die Schadensbilder nicht immer sofort in Erscheinung treten.

Zudem weisen bekannte Anlagen den weiteren Nachteil auf, dass diese eine elektrische Stromversorgung benötigen. Dies stellt vor allem in selten bewohnten bzw. bewirtschafteten Gebäuden ein ernstes Problem dar, da solche Gebäude teilweise zwar einen Wasser- jedoch keinen Stromanschluss aufweisen, bzw. der Stromanschluss zum Schutz der elektrischen Geräte in Abwesenheit der Bewohner bzw. Benutzer stillgelegt wird. Jedoch stellt in derartigen Gebäuden unkontrollierter Wasseraustritt eine ernstzunehmende Bedrohung dar, da ein solcher meist erst entdeckt wird, wenn bereits erheblicher Schaden entstanden ist.

Aufgabe der Erfindung ist es daher eine Anordnung zum Messen einer Flüssigkeitsentnahme aus einer Flüssigkeits-Hauptleitung der eingangs genannten Art anzugeben, mit welcher die genannten Nachteile vermieden werden können, mit welcher auch bei besonders geringen Flüssigkeitsmengen die unkontrolliert aus der Hauptleitung oder aus einer mit dieser verbundenen Leitungen oder Entnahmestellen austreten, zuverlässig erkannt werden können, und gegebenenfalls eine Absperrung der Hauptleitung vorgenommen werden kann. Eine weitere Aufgabe ist, eine derartige Anordnung anzugeben, welche ohne elektrische Energie betrieben werden kann.

Erfindungsgemäß wird dies durch die Merkmale des Patentanspruches 1 erreicht.

Dadurch kann auch bei besonders geringen Flüssigkeitsmengen die unkontrolliert aus der Hauptleitung oder aus einer mit dieser verbundenen Leitungen oder Entnahmestellen austreten, zuverlässig erkannt werden, und gegebenenfalls eine Absperrung der Hauptleitung vorgenommen werden. Eine derartige Anordnung benötigt für deren Betrieb keine elektrische Energie, da mechanische Durchflusszähler eingesetzt werden können, und die Umschaltung zwischen den beiden Zählern strömungsmechanisch erfolgt. Diese Anordnung eignet sich zum Schutz vor Leitungswasserschäden von Hausinstallationen, insbesondere in abgelegenen Gebieten und Wochenendhäusern ohne elektrischer Energieversorgung. Die notwendige Energie wird ausschließlich aus dem Betriebsdruck des zu überwachenden Leitungssystems bezogen. Durch das Vorsehen eines Makrozählers und eines Mikrozählers können sehr unterschiedliche Flüssigkeitsentnahmen aus der Flüssigkeits-Hauptleitung genau bestimmt werden, da große Flüssigkeitsentnahmen mit dem Makrozähler und geringe Flüssigkeitsentnahmen mit dem Mirkozähler jeweils genau erfasst werden.

Das Überdruckventil steuert in Kombination mit dem Bypassventil das Öffnen und Schließen der Bypassleitung zum Mikrozähler. Das Bypassventil ist so ausgelegt, dass der Flüssigkeitsstrom bis zu einer definierten Durchflussmenge über die Bypassleitung zum Mikrozähler geführt wird. Die definierte Durchflussmenge muss mindestens der unteren Messbereichsgrenze vom Makrozähler entsprechen. Wird die definierte Durchflussmenge überschritten, vergrößert sich der Strömungswiderstand im Strömungskanal vom Bypassventil, die Ventilnadel beschleunigt in Fließrichtung und verschließt die Bypassleitung. Die Flüssigkeit strömt nun durch den Makrozähler.

Dabei kann vorgesehen sein, dass beide Zähler durch eine Messdose verbunden sind. Die Anzeige besteht aus zwei Scheiben, auf denen eine Skala mit den Mengenangaben radial aufgedruckt ist. Im Bereich der Skala sind Bohrungen für die Aufnahme eines Auslösebolzens angeordnet. Mit der Positionierung der Bolzen in den Anzeigescheiben vom Makrozähler und vom Mikrozähler kann jene Flüssigkeitsmenge eingestellt werden, die durch die Hauptleitung fließen darf, ohne den Auslösemechanismus für die Absperrung der Hauptleitung zu aktivieren. Wird der Durchfluss vom Makrozähler vor Erreichen der Auslösemenge unterbrochen, dreht sich die Anzeigescheibe vom Makrozähler durch eine automatische Rückstellvorrichtung in die Ausgangsposition zurück. Dadurch ist eine kontrollierte Flüssigkeitsentnahme gewährleistet und diese kann auf die Bedürfnisse der Anwender genauestens abgestimmt werden.

Die Durchflussmenge im Mikrozähler wird kumuliert erfasst. Ein automatisches Rückstellen der Anzeigescheibe bei Unterbrechung des Durchflusses erfolgt nicht, damit das unkontrollierte Austreten bei besonders geringen Flüssigkeitsmengen aus der Hauptleitung oder aus mit dieser verbundenen Leitungen oder Entnahmestellen über einen größeren Zeitraum erfasst werden kann. An den Anzeigescheiben kann immer die aktuelle Durchflussmenge abgelesen werden.

Weiters ist vorgesehen, dass die Auslösebolzen auf den Anzeigescheiben beim Erreichen der vorgebbaren Durchflussmengen sowohl beim Makrozähler, als auch beim Mikrozähler unabhängig voneinander einen Hebel umlegen, der wiederum mechanisch mit einem Auslösemechanismus am Schnellschlussventil verbunden ist. Das Schnellschlussventil ist mit einem Federspeicher ausgestattet, der die notwendige Energie zum Absperren aufbringt. Der angestoßene Auslösemechanismus sperrt zuverlässig die Hauptleitung.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform einer erfindungsgemäßen Anordnung in schematischer Darstellung;
Fig. 2 die Anordnung gemäß Fig. 1, wobei das Überdruckventil, das Bypassventil und der Differenzschalter im Schnitt dargestellt sind;
Fig. 3 eine teilweise im Schnitt dargestellte 3D-Ansicht des Mikrozählers;
Fig. 4 eine Schnittdarstellung einer bevorzugten Ausführungsform eines Mikrozählers entlang der Achse 108;
Fig. 5a eine teilweise im Schnitt dargestellte 3D-Ansicht der Sperrplatte, wobei sich die Wippe in der oberen Ausgangsstellung befindet;
Fig. 5b die Ansicht gemäß Fig. 5a wobei sich die Wippe in der unteren Ausgangsstellung befindet;
Fig. 6a eine 3D-Ansicht der Wippe in der oberen Ausgangsstellung;
Fig. 6b eine 3D-Ansicht der Wippe in der unteren Ausgangsstellung;
Fig. 7a eine teilweise im Schnitt dargestellte 3D-Ansicht einer bevorzugten Ausführungsform einer automatischen Rückstelleinrichtung mit abgesenkter Anzeigescheibe in Arbeitsstellung;
Fig. 7b eine bevorzugte Ausführungsform eines Differenzschalters, wobei sich die Kolbenplatte in Arbeitsstellung befindet;
Fig. 8a die Ansicht gemäß Fig. 7a mit angehobener Anzeigescheibe in Ruhestellung; und
Fig. 8b die Ansicht gemäß Fig. 7b wobei sich die Kolbenplatte in Ruhestellung befindet.

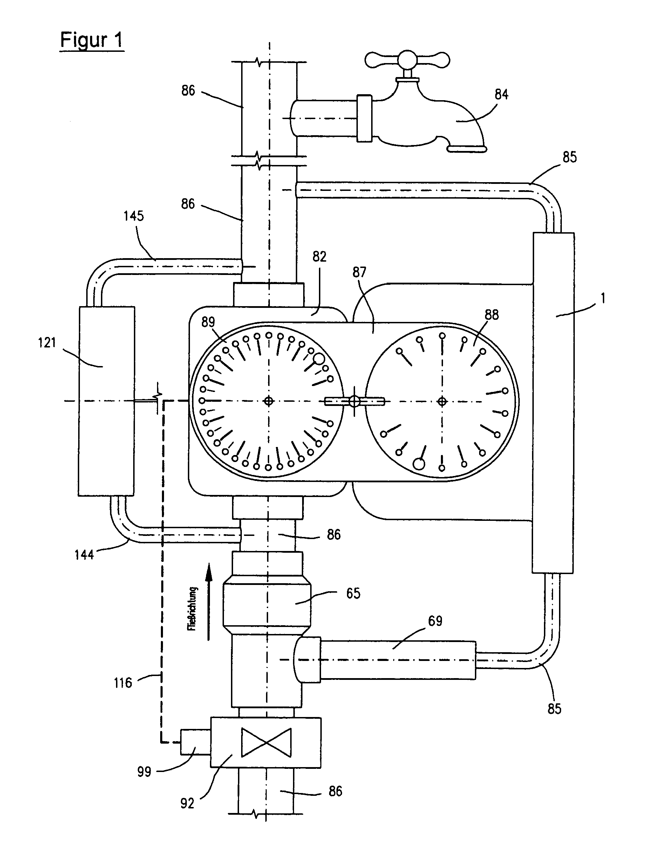

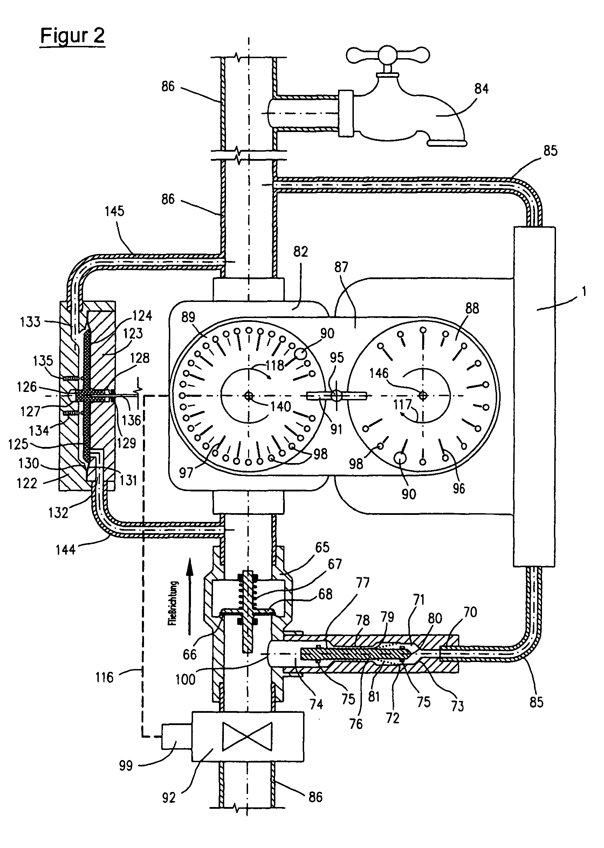

Die Fig. 1 und 2 zeigen eine besonders bevorzugte Ausführungsform einer Anordnung zum automatischen Absperren einer Flüssigkeits-Hauptleitung 86 bei unkontrolliertem Austreten einer vorgebbaren Flüssigkeitsmenge aus der Flüssigkeits-Hauptleitung 86, mit einer bevorzugten Ausbildung einer Anordnung zum Messen einer Flüssigkeitsentnahme aus der Flüssigkeits-Hauptleitung 86, wobei ein Makrozähler 82 strömungstechnisch in der Flüssigkeits-Hauptleitung 86 angeordnet ist, wobei ein Mikrozähler 1 strömungstechnisch in einer Bypassleitung 85 angeordnet ist, welche Bypassleitung 85 den Makrozähler 82 überbrückt, und wobei bei einer Flüssigkeitsentnahme aus der Flüssigkeits-Hauptleitung 86 unterhalb eines vorgebbaren Grenzwertes ein Bypassventil 69 die Bypassleitung 85 freigibt und ein Überdruckventil 65 die Flüssigkeits-Hauptleitung 86 sperrt, und bei einer Flüssigkeitsentnahme über dem vorgebbaren Grenzwert das Bypassventil 69 die Bypassleitung 85 sperrt und das Überdruckventil 65 die Flüssigkeits-Hauptleitung 86 freigibt, welche Anordnung zum Detektieren einer Flüssigkeitsentnahme aus einer Flüssigkeits-Hauptleitung 86 ein Absperrventil, insbesondere ein Schnellschlussventil 92, steuert, welches Absperrventil in der Flüssigkeits-Hauptleitung 86 angeordnet ist.

Dadurch kann auch bei besonders geringen Flüssigkeitsmengen die unkontrolliert aus der Flüssigkeits-Hauptleitung 86 bzw. Hauptleitung oder aus einer mit dieser verbundenen Leitungen oder Entnahmestellen austreten, zuverlässig erkannt werden, und gegebenenfalls eine Absperrung der Hauptleitung vorgenommen werden. Eine derartige Anordnung benötigt für deren Betrieb keine elektrische Energie, da mechanische Durchflusszähler eingesetzt werden können, und die Umschaltung zwischen den beiden Zählern strömungsmechanisch erfolgt. Diese Anordnung eignet sich zum Schutz vor Leitungswasserschäden von Hausinstallationen, insbesondere in abgelegenen Gebieten und Wochenendhäusern ohne elektrischer Energieversorgung. Die notwendige Energie wird ausschließlich aus dem Betriebsdruck des zu überwachenden Leitungssystems bezogen. Durch das Vorsehen eines Makrozählers 82 und eines Mikrozählers 1 können sehr unterschiedliche Flüssigkeitsentnahmen aus der Flüssigkeits-Hauptleitung 86 genau bestimmt werden, da große Flüssigkeitsentnahmen mit dem Makrozähler 82 und geringe Flüssigkeitsentnahmen mit dem Mirkozähler 1 jeweils genau erfasst werden.

Wie in Figur 1 ersichtlich, besteht die Anordnung zum automatischen Absperren einer Flüssigkeits-Hauptleitung 86 bei unkontrolliertem Austreten einer ein vorgebbares Ausmaß überschreitenden Flüssigkeitsmenge aus dieser Hauptleitung 86 oder aus einer mit dieser Hauptleitung 86 verbundenen Leitung oder Flüssigkeits-Entnahmestelle 84 aus einem Makrozähler 82, einem Überdruckventil 65, dem Bypassventil 69 und dem Mikrozähler 1, die durch die Hauptleitung 86 und die Bypassleitung 85 miteinander verbunden sind. Parallel zum Makrozähler 82 ist ein Differenzschalter 121 angeordnet, der durch die Druckausgleichsleitungen 144,145 mit der Hauptleitung 86 verbunden ist.

Der Gehäuseboden 122 vom Differenzschalter 121 ist dicht mit dem Deckel 123 verbunden (Figur 2). Der Gehäuseboden 122 und der Deckel 123 weisen im gemeinsam anliegenden Bereich jeweils eine kegelstumpfförmige Einbuchtung 130,131 auf, welche Einbuchtungen 130,131 fluchtend zueinander ausgerichtet sind. Zwischen den Einbuchtungen 130,131 ist eine entlang der Berandung der Einbuchtungen 130,131 eingespannte Membran 124 angeordnet, welche mit der Kolbenplatte 125 verbunden ist. Der Führungsbolzen 126 von der Kolbenplatte 125 ist in der Führung 127 vom Gehäuseboden 122 und in der Führung 128 vom Deckel 123 verschiebbar gelagert. Eine Feder 134 ist in die Nut 135 eingelegt und liegt an der Unterseite von der Kolbenplatte 125 an.

Eine Schubstange 136 ist mit dem Führungsbolzen 126 fix verbunden. Die Schubstange 136 wird durch die Dichtung 129 im Deckel 123 gesteckt und kann in Längsrichtung bewegt werden.

Bevorzugt ist vorgesehen, dass der Makrozähler 82 und/oder der Mirkozähler 1 jeweils mit einer Anzeige, insbesondere einer drehbar gelagerten Anzeigescheibe 88, 89, verbunden sind. Gemäß einer besonders bevorzugten Ausführungsform ist dabei in Weiterbildung der gegenständlichen Erfindung bevorzugt vorgesehen, dass der Mikrozähler 1 und/oder der Makrozähler 82 magnetisch mit der Anzeige gekoppelt sind.

Der Mikrozähler 1 und der Makrozähler 82 sind durch die Messdose 87 miteinander verbunden. Auf der Messdose 87 ist über dem Mikrozähler 1 eine um die Welle 146 drehbar gelagerte Anzeigescheibe 88 mit einer Mengenskala 96 angebracht.

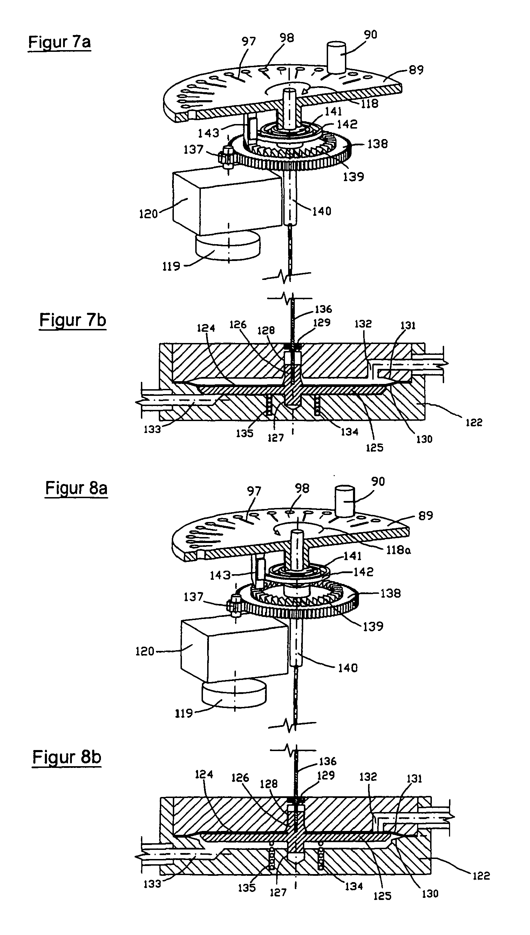

Über dem Makrozähler 82 ist eine um die Welle 140 drehbar gelagerte Anzeigescheibe 89 mit einer Mengenskala 97 angebracht und liegt auf dem Flansch 141 der Welle 140 auf (Figur 7a, Figur 8a). Die Welle 140 ist gegen Verdrehen gesichert und in Längsrichtung verschiebbar gelagert. An der Unterseite der Anzeigescheibe 89 ragt ein keilförmiger Mitnehmerstab 143 in Richtung Zahnrad 138 und greift im abgesenkten Zustand der Anzeigescheibe 89 in den auf dem Zahnrad 138 aufgesetzten Sägezahnkranz 139 ein.

Der keilförmige Mitnehmerstab ist durch eine eingerollte Blattfeder142 mit dem Flansch 141 der Welle 140 verbunden.

Im Bereich der Mengenskalen 96,97 sind Bohrungen 98 in die Anzeigescheiben 88,89 für die Aufnahme der Auslösebolzen 90 eingebohrt (Figur 2). Weiters ist auf der Messdose 87 ein um den Mittelpunkt der Welle 95 drehbar gelagerter Schalthebel 91 angebracht. Dieser Schalthebel 95 ist mit dem Auslösemechanismus 99 am Schnellschlussventil 92 mechanisch verbunden. Diese Verbindung wird durch die Strichlinie 116 dargestellt.

In der Hauptleitung 86 ist zwischen dem Makrozähler 82 und dem Schnellschlussventil 92 ein Überdruckventil 65 in Serie angeordnet.

Am Ausgang 100 vom Überdruckventil 65 ist das Bypassventil 69 angebaut. Das Bypassventil 69 bildet mit dem Überdruckventil 65 eine Parallelschaltung.

In der Einlaufkammer 74 und der Auslaufkammer 71 sind Führungen 75 eingebaut. In diesen Führungen ist die Ventilnadel 76 in Längsrichtung verschiebbar gelagert. Die Außenseite der Ventilnadel 76 ist mit Kerben 77 versehen. Der Absatz 79 dient als Sitz für die Rückstellfeder 81 an der Ventilnadel 76 und der Absatz 72 dient als Sitz für die Rückstellfeder 81 in der Auslaufkammer 71, welche begrenzt durch eine kegelstumpfförmige Dichtfläche 73 in den Auslauf 70 zur Bypassleitung 85 mündet.

In der Bypassleitung 85 ist der Mikrozähler 1 parallel zum Makrozähler 82 angeordnet.

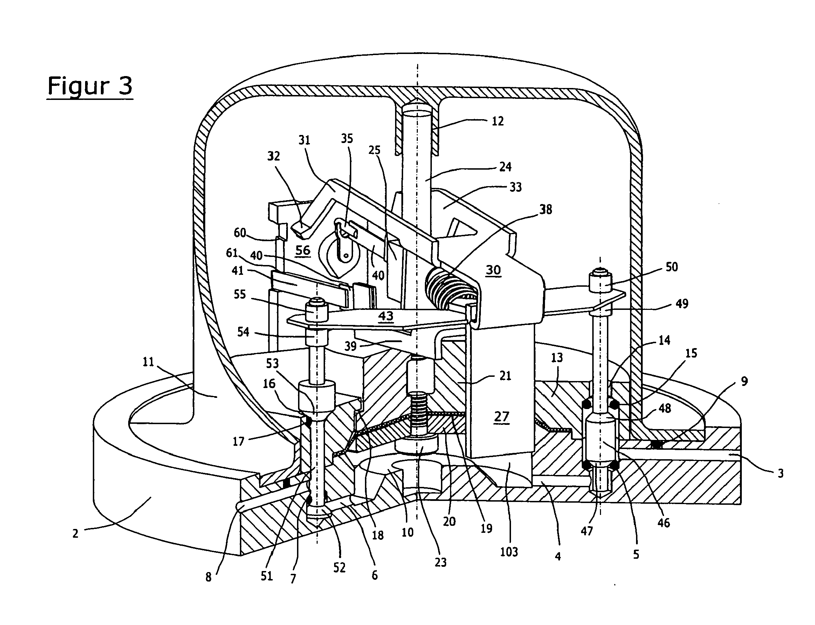

Der Mikrozähler 1 (Figur 3) ist aus einem Gehäuseboden 2 und einem Gehäusedeckel 11 gebildet. Eine dichte Verbindung zwischen dem Gehäuseboden 2 und einem Gehäusedeckel 11 wird durch den Dichtring 9 gewährleistet.

Der Einlaufkanal 3 bildet mit dem Einlauf 4 in den zylindrischen Bereich der Einbuchtung 103 vom Gehäuseboden 2 und dem Einlauf 14 in den Hohlraum vom Gehäusedeckel 11 eine flüssigkeitsdurchströmbare Verbindung. Die Verbindung zwischen dem zylindrischen Bereich der Einbuchtung 103 vom Gehäuseboden 2, dem Auslauf 16 aus dem Hohlraum vom Gehäusedeckel 11 und dem Auslaufkanal 8 ist ebenfalls flüssigkeitsdurchströmbar.

Im Gehäuseboden 2 sind der Dichtring 5 vom Einlassventil 46 und der Dichtring 7 vom Auslassventil 51 eingelegt. Die Innendurchmesser von den Dichtringen 5, 15 fluchten mit dem Durchmesser vom Einlauf 14. Der Durchmesser vom Einlauf 14 ist so gewählt, dass der Ringquerschnitt vom Einlauf 14 mit eingesetztem Einlassventil 46 mindestens jenem vom Einlaufkanal 3 entspricht.

Das Einlassventil 46 wird durch eine Bohrung im Ventilfederblatt 43 gerührt. Der Schubring 49 und der Zugring 50 sind mit dem Einlassventil 46 verbunden und stellen eine auf Zug und Schub belastbare gelenkige Verbindung zwischen Einlassventil 46 und Ventilfederblatt 43 her.

Im Spannring13 sind der Dichtring 15 vom Einlassventil 46 und der Dichtring 17 vom Auslassventil 51 eingelegt. Der Durchmesser vom Auslauf 16 ist so gewählt, dass der Ringquerschnitt mit eingesetztem Auslassventil 51 mindestens jenem vom Auslaufkanal 8 entspricht.

Das Auslassventil 51 wird durch eine Bohrung im Ventilfederblatt 43 geführt. Der Schubring 54 und der Zugring 55 sind mit dem Auslassventil 51 verbunden und stellen eine auf Zug und Schub belastbare gelenkige Verbindung zwischen Auslassventil 51 und Ventilfederblatt 43 her.

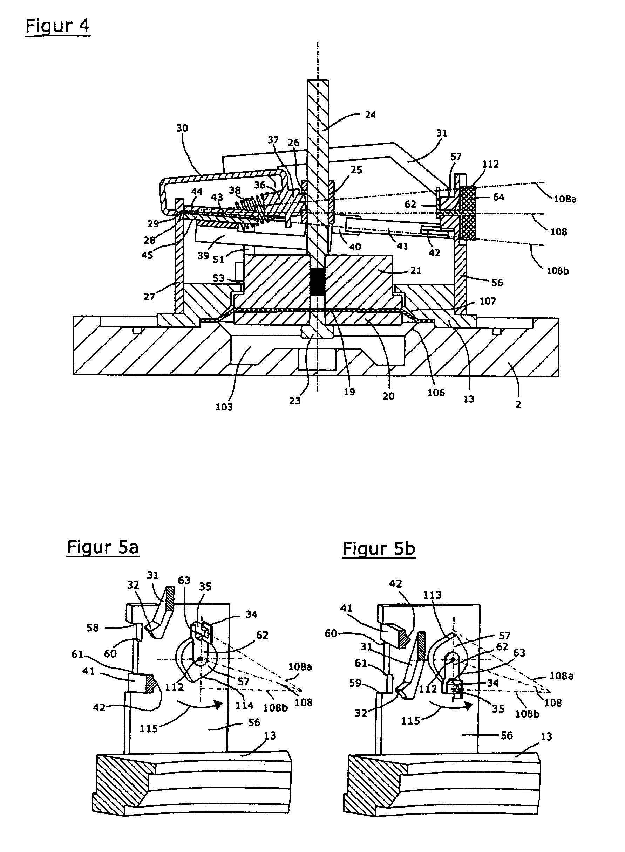

Der Gehäuseboden 2 ist dicht mit dem Spannring 13 verbunden (Figur 4). Der Gehäuseboden 2 und der Spannring 13 weisen im gemeinsam anliegenden Bereich jeweils eine kegelstumpfförmige Einbuchtung 106,107 auf, welche Einbuchtungen 106,107 fluchtend zueinander ausgerichtet sind. Zwischen den Einbuchtungen 106,107 ist eine entlang der Berandung der Einbuchtungen 106,107 eingespannte Membran 19 angeordnet, auf welcher der Kolben 21 aufliegt. Die an der Unterseite von der Membran 19 anliegende Kolbenplatte 20 wird durch die Schraube 23 mit dem Kolben 21 dicht verschraubt.

Von der Oberseite des Kolbens 21 ragt ein Führungsbolzen 24 in Richtung Gehäusedeckel 11, der in einer am Gehäusedeckel 11 angebauten Führung 12 verschiebbar gelagert ist.

Am Spannring 13 ist der Lagerbock 27 fixiert. Die C-förmige Wippe 30, liegt in der sich an der Außenseite des Lagerbocks 27 genau auf Höhe der Achse 108 befindlichen Kerbe 29. An der gegenüberliegenden Seite der Wippe 30 ist ein Federsitz 36 zur Aufnahme der Feder 38 angebracht.

Die Kerbe 28 befindet sich an der Innenseite des Lagerbocks 27 genau auf Höhe der Achse 108 und dient zur Fixierung vom Ventilfederblatt 43, welches zwischen zwei Platten 44,45 eingespannt ist. Die Platten 44,45 ragen über die Einbuchtung 109 des Ventilfederblatts 43 hinaus und bilden eine Aufnahme für die Feder 38.

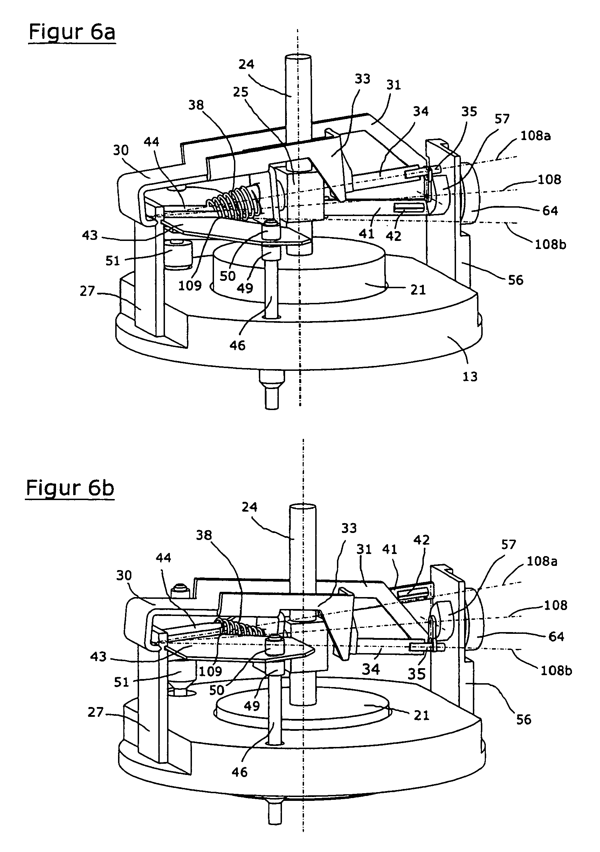

Ein auf der Außenseite der C-förmigen Wippe 30 angebrachter Bolzen 37 greift in die Bohrung 26 eines mit dem Führungsbolzen 24 fix verbundenen Mitnehmers 25 ein. Weiters wird die Wippe 30 auf der Seite des Auslassventils 51 durch den Auslösebügel 31 mit dem Auslösenocken 32 verlängert (Figur 6a, Figur 6b). Auf der Seite vom Einlassventil 46 bildet der Rotationsbügel 33 eine weitere Verlängerung der Wippe 30. Dass Ende vom Rotationsbügel 33 ist Z-förmig abgewinkelt, sodass die Aufnahme der Blattfeder 34 mit dem Rotationsstab 35 genau mit der Ebene, welche durch die Achsen 108, 108a,108b gebildet wird, fluchtet.

Am Spannring 13 ist an der gegenüberliegenden Seite vom Lagerbock 27 eine Sperrplatte 56 mit der verbundenen Nockenscheibe 57 fixiert. Die Achse 108 verläuft genau durch die Mitte der Nockenscheibe 57.

Der Rotationsstab 35 greift in den Schlitz 63 der Kurbel 62 ein (Figur 5a, Figur 5b). Die Kurbel 62 ist durch die Welle 112 mit dem Permanentmagneten 64 kraftschlüssig verbunden und mit der Achse 108 fluchtend drehbar in der Sperrplatte 56 und der Nockenscheibe 57 gelagert.

Auf der Unterseite der Platte 45 ist der Sperrbügel 39 mit der Blattfeder 40 und der Sperrklinke 41 mit Sperrklinkennocken 42 angebaut.

Seitlich in die Sperrplatte sind der obere Anschlag 58 und der untere Anschlag 59, sowie die obere Sperrkante 60 und die untere Sperrkante 61 eingearbeitet.

Nachfolgend wird die Funktion der vorstehend beschriebenen besonders bevorzugten Ausführungsform einer erfindungsgemäßen Anordnung beschrieben.

Jeder Flüssigkeitsaustritt aus der Hauptleitung 86, egal ob es sich um eine bewusste Entnahme über eine Flüssigkeitsentnahmestelle 84 oder um einen Leitungsschaden in der Hauptleitung 86 oder eine mit dieser Hauptleitung 86 verbundenen Leitungen handelt, wird entweder vom Mikrozähler 1 oder vom Makrozähler 82 erfasst (Figur 1).

Das Überdruckventil 65 steuert in Kombination mit dem Bypassventil 69 das Öffnen und Schließen der Bypassleitung 85 zum Mikrozähler 1. Das Bypassventil 69 ist so ausgelegt, dass der Flüssigkeitsstrom bis zu einer definierten Durchflussmenge über die Bypassleitung 85 zum Mikrozähler 1 geführt wird. Die definierte Durchflussmenge muss mindestens der unteren Messbereichsgrenze vom Makrozähler 82 entsprechen.

Das Überdruckventil 65 weist einen mittels einer Feder 67 gegen eine Dichtungsfläche 66 gedrückten Dichtungskörper 68 auf (Figur 2). Die Federkraft der Feder 67 entspricht im Ruhezustand mindestens jener Kraft, die notwendig ist, um den Staudruck vor dem Überdruckventil 65 am Ausgang 100 entgegenzuwirken, der bis zum Erreichen der definierten Durchflussmenge in der Bypassleitung 85 aufgebaut wird.

Wird die definierte Durchflussmenge über die Bypassleitung 85 zum Mikrozähler 1 überschritten, vergrößert sich bedingt durch die Kerben 77 an der Außenseite der Ventilnadel 76 der Strömungswiderstand im Strömungskanal 78 vom Bypassventil 69, die Ventilnadel 76 beschleunigt in Fließrichtung und verschließt die Bypassleitung 85. Der Staudruck vor dem Überdruckventil 65 übersteigt die Rückhaltekraft der Feder 67, der Dichtungskörper 68 hebt von der Dichtungsfläche 66 ab und die Flüssigkeit strömt durch den Makrozähler 82. Verringert sich der Flüssigkeitsstrom in der Hauptleitung 86 wieder unter die definierte Durchflussmenge über die Bypassleitung 85 zum Mikrozähler 1, hebt die Rückstellfeder 81 die Nadelspitze von der Dichtfläche 73 ab. Die Federkraft der Rückstellfeder 81 entspricht im angespanntem Zustand, wenn die Nadelspitze 80 an der Dichtfläche 73 anliegt, mindestens jener Kraft die notwendig ist, um den Staudruck vor dem Überdruckventil 65 am Ausgang 100 entgegenzuwirken, welcher Staudruck nach dem Schließen des Überdruckventils 65 am Ausgang 100 ansteht.

Erfindungsgemäß erfolgt die exakte Messung der noch so kleinen Durchflussmengen durch Hubbewegungen eines Kolbens 21 im Mikrozähler 1 (Figur 5a). Der Kolben 21 befindet sich zunächst in der oberen Ausgangsstellung, das Ventilfederblatt 43 wird im Bereich der Einbuchtung 109 durch die gespannte Feder 38 nach unten gedrückt, bis die Sperrklinke 41 auf dem unteren Anschlag 59 der Sperrplatte 56 aufliegt. Der Weg, den das Ventilfederblatt 43 im Bereich der Einbuchtung 109 während der Bewegung von der oberen Grundstellung entlang der Achse 108a und der unteren Grundstellung entlag der Achse 108b zurücklegt, ist größer als der Weg, den das Einlassventil 46 und das Auslassventil 51 beim Umschalten zurücklegen. Dadurch ist das Ventilfederblatt 43 vorgespannt und drückt auf den Schubring 49 vom Einlassventil 46, dessen Dichtfläche 47 am Dichtring 5 anliegt und den Einlauf 4 in die Ausbuchtung 103 vom Gehäuseboden 13 verschließt (Figur 3). Gleichzeitig drückt das vorgespannte Ventilfederblatt 43 auch auf den Schubring 54 vom Auslassventil 51, dessen Dichtfläche 53 am Dichtring 17 anliegt und den Auslauf 16 aus dem Hohlraum vom Gehäusedeckel 11 verschließt.

Im ersten Arbeitstakt bewegt sich der Kolben nach unten. Die Flüssigkeit strömt vom Bypassventil 69 über die Bypassleitung 85 in den Einlaufkanal 3, weiter durch den Einlauf 14 in den Innenraum vom Gehäusedeckel 11 und drückt den Kolben 21 in Richtung Gehäuseboden 2. Zwischen dem Kolben 21 und der Kolbenplatte 20, sowie am äußeren Rand zwischen dem Gehäuseboden 2 und dem Spannring 13, ist die Membran 19 dicht verpresst eingespannt.

Die Flüssigkeit in der Einbuchtung 103 vom Gehäuseboden 2 fließt durch den Auslauf 6 und den Auslaufkanal 8 in die Bypassleitung 85 und mündet unmittelbar nach dem Makrozähler 82 wieder in die Hauptleitung 86.

Der Mitnehmer 25 auf dem Führungsbolzen 24 schwenkt die Wippe 30 im Zuge der Abwärtsbewegung vom Kolben 21 nach unten und die Feder 38 wird gestaucht. Bevor der Kolben 21 die untere Grundstellung erreicht, hat die Feder 38 den Todpunkt überschritten und das Ventilfederblatt 43 wird im Bereich der Einbuchtung 109 durch die gespannte Feder 38 nach oben gedrückt. Die Sperrklinke 41 rastet in der unteren Sperrkante 61 ein, dadurch bleibt das Ventilfederblatt 43 vorgespannt und drückt weiterhin auf den Schubring 49 vom Einlassventil 46 und den Schubring 54 vom Auslassventil 51.

Diese Ventilstellung bleibt so lange erhalten, bis der Auslösenocken 32 am Auslösebügel 31 der Wippe 30 die Sperrklinke 41 mit dem Sperrklinkennocken 42 in horizontaler Richtung über die untere Sperrkante 61 hinaus wegdrückt (Figur 5a). In diesem Moment hat der Kolben 21 die untere Grundstellung erreicht. Der Druck von der Feder 38 bewegt das Ventilfederblatt 43 nach oben und zieht das Einlassventil 46 am Zugring 50 und das Auslassventil 51 am Zugring 55 nach oben.

Nach der Aufwärtsbewegung des Einlaufventils 46 drückt die Dichtfläche 48 auf den Dichtring 15 und schließt den Einlauf 14 in den Innenraum vom Gehäusedeckel 11 und nach der Aufwärtsbewegung des Auslaufventils 51 liegt die Dichtfläche 52 am Dichtring 7 an und schließt den Auslauf 6 im Gehäuseboden 2 und der zweite Arbeitstakt beginnt (Figur 3).

Die Flüssigkeit strömt vom Einlaufkanal 3 weiter durch den Einlauf 4 in die Einbuchtung 103 vom Gehäuseboden 13 und drückt den Kolben 21 in Richtung Gehäusedeckel 11. Die Flüssigkeit im Innenraum des Gehäusedeckels 11 fließt über den Auslauf 16 und den Auslaufkanal 8 in die Bypassleitung 85 und mündet unmittelbar nach dem Makrozähler 82 wieder in die Hauptleitung 86.

Der Mitnehmer 25 auf dem Führungsbolzen 24 schwenkt die Wippe 30 im Zuge der Aufwärtsbewegung vom Kolben 21 nach oben und die Feder 38 wird gestaucht (Figur 6b). Bevor der Kolben 21 die obere Grundstellung erreicht, hat die Feder 38 den Todpunkt überschritten und das Ventilfederblatt 43 wird im Bereich der Einbuchtung 109 durch die gespannte Feder 38 nach unten gedrückt. Die Sperrklinke 41 rastet in der oberen Sperrkante 60 ein, dadurch bleibt das Ventilfederblatt 43 vorgespannt und hält die Zugspannung auf den Zugring 50 vom Einlassventil 46 und den Zugring 55 vom Auslassventil 51 aufrecht.

Diese Ventilstellung bleibt so lange erhalten, bis der Auslösenocken 32 am Auslösebügel 31 der Wippe 30, die Sperrklinke 41 mit dem Sperrklinkennocken 42 in horizontaler Richtung über die obere Sperrkante 60 hinaus wegdrückt (Figur 5b). In diesem Moment hat der Kolben 21 die obere Grundstellung erreicht und mit dem Kippen des Ventilfederblatts 43 nach unten beginnt wieder der erste Arbeitstakt.

Die mit dem Rotationsbügel 33 verbundene Blattfeder 34 führt die gleichen vertikalen Pendelbewegungen wie die Wippe 30 aus. Der an der Blattfeder 34 fixierte Rotationsstab 35 befindet sich gleich wie der Kolben 21 zu Beginn des ersten Arbeitstaktes in der oberen Grundstellung und die Achse des Rotationsstabs 35 liegt genau auf der Achse 108a. Während der Abwärtsbewegung gleitet der Rotationsstab 35 im Schlitz 63 der Kurbel 62 in Richtung Achse 108, bis der Rotationsstab 35 von der schiefen Ebene 113 abgelenkt wird und die Kurbel 62 mit den durch die Achse 112 verbundenen Permanentmagneten 64 in Richtung vom Pfeil 115 dreht. Bei der Aufwärtsbewegung im zweiten Arbeitstakt wird der Rotationsstab 35 von der schiefen Ebene 114 abgelenkt und die Kurbel 62 dreht sich weiter in Richtung Pfeil 115.

Die hochkant ausgerichtete Blattfeder 34 überträgt die vertikalen Kräfte und ist in horizontale Richtung zur Ausführung der Kreisbewegung elastisch und die durch die Achsen 108, 108a,108b gebildete Ebene hinausragenden schiefen Ebenen 113,114 garantieren, dass sich die Kurbel 62 immer in Richtung Pfeil 115 dreht.

Der rotierende Permanentmagnet 64 überträgt durch die magnetischen Anziehungskräfte die Drehbewegung auf eine weitere magnetische Scheibe 119 im Inneren vom Zählwerk der Messdose 87 (Figur 7a, 8a). Durch entsprechende Übersetzungen im Getriebe 120 in der Messdose 87 kann die Durchflussmenge über einen bestimmten Zeitraum mittels Anzeigescheibe 88 vom Mikrozähler 1 angezeigt werden.

Der verwendete, handelsübliche Wasserzähler 83 als Trockenläufer ist ebenfalls mit einem rotierenden Magneten zum Antrieb des Getriebes 120 in der Messdose 87 ausgestattet. Die Anzeigescheibe 89 vom Makrozähler 82 zeigt die Durchflussmenge durch den Makrozähler 82 über einen bestimmten Zeitraum an.

Wenn Flüssigkeiten durch den Mikrozähler 1 oder durch den Makrozähler 82 fließen, drehen sich die Anzeigescheiben in Richtung der Pfeile 117,118 (Figur 2). Der Mikrozähler 2 ist dazu ausgelegt, geringe Durchflussmengen zu messen. Durch das Einstecken eines Auslösebolzens 90 in eine der Bohrungen 98 entlang der Mengenskala 96 vom Mikrozähler 1 lässt sich eine Flüssigkeitsmenge vorgeben, die mit einer sehr geringen Fließgeschwindigkeit durch die Hauptleitung fließen darf. Ist das vorgegebene Maß erreicht, liegt der Auslösebolzen 90 am Schalthebel 91 an. Wird der Durchfluss durch den Mikrozähler 1 nicht unterbrochen, dreht sich die Anzeigescheibe 88 weiter in Richtung Pfeil 117 und der Auslösebolzen 90 verdreht den Schalthebel 91, der wiederum den Auslösemechanismus 99 am Schnellschlussventil 92 aktiviert und die Hauptleitung absperrt.

Der Makrozähler 82 ist mit einem Rückstellmechanismus versehen, damit die kontrollierte Entnahme bis zum Erreichen eines vorgebbaren Maßes aus einer Flüssigkeitsentnahmestelle 84 gewährleistet ist.

Kontrollierte oder unkontrollierte Austritte einer Flüssigkeitsmenge aus der Hauptleitung 86 oder aus einer mit dieser Hauptleitung 86 verbundenen Leitung oder Flüssigkeitsentnahmestelle 84, die durch den Makrozähler fließen, erzeugen durch den Strömungswiderstand im Makrozähler eine Druckdifferenz zwischen dem Einlauf 132 und dem Auslauf 133 (Figur 7b). Der Unterdruck in der kegelstumpfförmigen Ausbuchtung 130 im Gehäuseboden 122 zieht die Kolbenplatte 125 und die Schubstange 136 in Richtung Gehäuseboden 122.

Die Welle 140 senkt sich gemeinsam mit der auf dem Flansch 141 aufliegenden Anzeigescheibe 89 ab und der keilförmige Mitnehmerstab 143 greift in den Sägezahnkranz 139 vom Zahnrad 138 ein (Figur 7a). Das Zahnrad 138 wird durch das Antriebsrad 137 vom Getriebe 120 angetrieben, dreht die Anzeigescheibe 89 in Richtung des Pfeils 118 und spannt dabei die Blattfeder 142.

Wird der Durchfluss von der kontrollierten oder unkontrollierten Flüssigkeitsentnahme unterbrochen, gleicht sich die Druckdifferenz zwischen dem Einlauf 132 und dem Auslauf 133 vom Differenzschalter 121 über die flüssigkeitsdurchströmbare Verbindung durch den Flügelrad- oder Ringkolbenzähler im Makrozähler 82 aus (Figur 8b). Die Feder 134 drückt auf die Kolbenplatte 125 und die Schubstange 136 in Richtung Deckel 123.

Die Schubstange 136 hebt die Welle 140 mit der auf dem Flansch 141 aufliegenden Anzeigescheibe 89 an, der keilförmige Mitnehmerstab 143 greift nicht mehr in den Sägezahnkranz 139 ein und die Rückstellkraft der Blattfeder 142 dreht die Anzeigescheibe 89 in die Richtung von Pfeil 118a in die Ausgangsposition zurück.

Wird der Flüssigkeitsstrom durch den Makrozähler 82 nicht unterbrochen, dreht sich die abgesenkte Anzeigescheibe 89 weiter, bis der Auslösebolzen 90 den Schalthebel 91 umlegt, der wiederum den Auslösemechanismus 99 am Schnellschlussventil 92 aktiviert und die Hauptleitung 86 absperrt.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Anordnung zum Messen einer Flüssigkeitsentnahme aus einer Flüssigkeits-Hauptleitung (86), wobei ein, insbesondere als Flügelradzähler oder als Ringkolbenzähler ausgebildeter, Makrozähler (82) strömungstechnisch in der Flüssigkeits-Hauptleitung (86) angeordnet ist, **dadurch gekennzeichnet, dass** ein, insbesondere als Hubkolbenzähler ausgebildeter, Mikrozähler (1) strömungstechnisch in einer Bypassleitung (85) angeordnet ist, welche Bypassleitung (85) den Makrozähler (82) überbrückt, und dass bei einer Flüssigkeitsentnahme aus der Flüssigkeits-Hauptleitung (86) unterhalb eines vorgebbaren Grenzwertes ein Bypassventil (69) die Bypassleitung (85) freigibt und ein Überdruckventil (65) die Flüssigkeits-Hauptleitung (86) sperrt, und bei einer Flüssigkeitsentnahme über dem vorgebbaren Grenzwert das Bypassventil (69) die Bypassleitung (85) sperrt und das Überdruckventil (65) die Flüssigkeits-Hauptleitung (86) freigibt.

2. Anordnung nach Anspruch 1, **dadurch gekennzeichnet, dass** der Mikrozähler (1) einen längsverschiebbaren Kolben (21) aufweist, welcher durch die den Mikrozähler (1) durchströmende Flüssigkeit zwischen einem oberen und einem unteren Todpunkt bewegbar ist.

3. Anordnung nach Anspruch 2, wobei der Mikrozähler (1) ein Einlassventil (46) und ein Auslassventil (51) aufweist, **dadurch gekennzeichnet, dass** das Einlassventil (46) und das Auslassventil (51) mit einem Ventilfederblatt (43) verbunden sind, welches Ventilfederblatt (43) wenigstens mittelbar an einer Sperrkante (60, 61) gehalten ist, und derart die Stellung des Einlassventils (46) und des Auslassventils (51) von einer Bewegung des Kolbens (21) zwischen dessen Todpunkten entkoppelt.

4. Anordnung nach Anspruch 3, **dadurch gekennzeichnet, dass** eine Auslösenocke (32) vorgesehen ist, zur Lösung des Ventilfederblatts (43) in einem Todpunkt des Kolbens (21).

5. Anordnung nach einem der Ansprüche 3 bis 4, **dadurch gekennzeichnet, dass** der Mikrozähler (1) eine Nockenscheibe (57) zur Umsetzung der Hubbewegung des Kolbens (21) in eine rotatorische Bewegung aufweist.

6. Anordnung nach einem der Ansprüche 1 bis 5, **dadurch gekennzeichnet, dass**, vorzugsweise lediglich, der Makrozähler (82) einen Rückstellmechanismus aufweist und/oder mit einem Rückstellmechanismus wirkverbunden ist, und der Mikrozähler (1) eine entnommene Flüssigkeitsmenge vorzugsweise kumuliert erfasst.

7. Anordnung nach Anspruch 6, **dadurch gekennzeichnet, dass** der Rückstellmechanismus einen Differenzschalter (121) umfasst, welcher Differenzschalter (121) strömungstechnisch den Makrozähler (82) überbrückt, und beidseitig des Makrozählers (82) strömungstechnisch mit der Flüssigkeits-Hauptleitung (86) verbunden ist.

8. Anordnung nach Anspruch 7, **dadurch gekennzeichnet, dass** der Differenzschalter (121) eine Schubstange aufweist, welche mit einer Anzeigescheibe (89) des Makrozählers (82) verbunden ist.

9. Anordnung nach Anspruch 6, 7 oder 8, **dadurch gekennzeichnet, dass** der Rückstellmechanismus derart ausgebildet ist, dass bei einem Flüssigkeitsdurchfluss durch den Makrozähler (82) der Differenzschalter (121) einen Mitnehmerstab (143) der Anzeigescheibe (89) wenigstens mittelbar mit einem Getriebe (120) eines Makrozählers (82) in Eingriff bringt.

10. Anordnung nach Anspruch 9, **dadurch gekennzeichnet, dass** der Mitnehmerstab (143) keilförmig ausgebildet ist, dass das Getriebe (120) einen an einer Welle (140) der Anzeigescheibe (89) drehbar gelagerten Sägezahnkranz (139) umfasst, und dass bei einem Flüssigkeitsdurchfluss durch den Makrozähler (82) der Mitnehmerstab (143) mit dem Sägezahnkranz (139) in Eingriff ist.

11. Anordnung nach Anspruch 9 oder 10, **dadurch gekennzeichnet, dass** der Mitnehmerstab (143) mit einem ersten Ende einer Blattfeder (142) verbunden ist, welche Blattfeder (142) derart angeordnet ist, dass eine Drehung der Anzeigescheibe (89) die Blattfeder (142) spannt.

12. Anordnung zum automatischen Absperren einer Flüssigkeits-Hauptleitung (86) bei unkontrolliertem Austreten einer vorgebbaren Flüssigkeitsmenge aus der Flüssigkeits-Hauptleitung (86), **gekennzeichnet durch** eine Anordnung zum Detektieren einer Flüssigkeitsentnahme aus einer Flüssigkeits-Hauptleitung (86) nach einem der Ansprüche 1 bis 11, welche ein Absperrventil, insbesondere ein Schnellschlussventil (92), steuert, welches Absperrventil in der Flüssigkeits-Hauptleitung (86) angeordnet ist.

13. Anordnung nach Anspruch 12, wobei der Makrozähler (82) und/oder der Mikrozähler (1) jeweils mit einer drehbar gelagerten Anzeigescheibe (88, 89) verbunden sind, **dadurch gekennzeichnet, dass** die drehbar gelagerten Anzeigescheiben (88, 89) Aufnahmen (98) für einen Auslösebolzen (90) aufweisen.

14. Anordnung nach Anspruch 13, **gekennzeichnet durch** einen Schalthebel (91), welcher zur Betätigung **durch** den wenigstens einen Auslösebolzen (90) vorgesehen ist.

15. Anordnung nach Anspruch 14, **dadurch gekennzeichnet, dass** der Schalthebel (91) mit dem Absperrventil wirkverbunden ist.
